# EUROPÄISCHE PATENTSCHRIFT

(11) **EP 2 655 047 B1**
(45) Veröffentlichungstag und Bekanntmachung des Hinweises auf die Patenterteilung: **30.01.2019**
(21) Anmeldenummer: 11796985.7
(22) Anmeldetag: 12.12.2011
(51) Int. Cl.: B29C 70/86, B29C 70/32, B29C 70/08, B62D 29/04

(54) **FAHRGASTZELLE MIT EINER HOHLEN POSITIVFORM UND EINER AUSSENHÜLLE AUS FASERVERSTÄRKTEM KUNSTSTOFF UND DEREN HERSTELLUNG**
PASSENGER CELL WITH A HOLLOW POSITIVE SHAPE AND AN OUTER COVERING MADE OF FIBRE REINFORCED PLASTIC, AND PRODUCTION THEREOF
HABITACLE COMPORTANT UNE FORME POSITIVE CREUSE ET UNE ENVELOPPE EXTÉRIEURE EN PLASTIQUE RENFORCÉ PAR FIBRES ET FABRICATION DE L'HABITACLE

(30) Priorität: 22.12.2010 US 201061425902 P; 24.09.2011 DE 102011114387
(43) Veröffentlichungstag der Anmeldung: 30.10.2013
(60) Teilanmeldung: 16194108.3
(73) Patentinhaber: MAGNA STEYR Fahrzeugtechnik AG & Co KG, 8041 Graz (AT)
(72) Erfinder: ERLACHER, Manuel, A-9545 Radenthein (AT); ZACHNEGGER, Harald, A-8041 Graz (AT)
(74) Vertreter: Zangger, Bernd
(86) Internationale Anmeldenummer: PCT/EP2011/072394
(87) Internationale Veröffentlichungsnummer: WO 2012/084560

(56) Entgegenhaltungen:
- EP-A1- 0 444 627
- BE-A- 661 744
- FR-A1- 2 894 869
- GB-A- 1 057 344
- GB-A- 1 490 575
- US-B1- 6 296 301

## Beschreibung

### TECHNISCHES GEBIET

Die Erfindung betrifft eine Fahrgastzelle, umfassend eine Positivform der Fahrgastzelle und eine diese Positivform einhüllende Außenhülle aus faserverstärktem Kunststoff. Des Weiteren betrifft die Erfindung ein Verfahren zur Herstellung einer Fahrgastzelle, bei dem eine Positivform der Fahrgastzelle in faserverstärktem Kunststoff eingehüllt wird.

### STAND DER TECHNIK

Die Herstellung eines Faserverbund-Hohlkörpers, insbesondere eines hohlen Faserverbundbauteils für ein Kraftfahrzeug ist aus der WO 2009/68127 A1 prinzipiell bekannt. Dabei werden Endlos-Verstärkungsfasern auf eine dem späteren Hohlraum entsprechende verlorene Form aufgebracht und mit einem härtbaren Harz imprägniert. Danach wird das aufgebrachte Harz ausgehärtet und die verlorene Form aus dem fertigen Bauteil herausgelöst.

Aus der US 4,705,716 ist weiterhin ein Verfahren zur Herstellung eines Karosseriebauteils eines Kraftwagens bekannt, bei dem ein Formkern aus geschäumtem Material hergestellt und dieser anschließend mit glasfaserverstärktem Kunststoff überzogen wird.

Aus der FR 2 894 869 A1 ist eine Methode zur Herstellung eines Flugzeugrumpfes bekannt, mit einem inneren Gerüst dass von einer Außenhaut aus Verbundmaterial umgeben ist. Dabei wird das innere Gerüst im Wesentlichen aus vielen Rahmenelementen aufgebaut, die während der Aufbringung des Verbundmaterials mit Schalenelementen zu einer geschlossenen Struktur vervollständigt werden. Nach dem Aufbringen des Verbundmaterials werden die Schalenelemente wieder entfernt.

Aus der GB 1,490,575 ist eine Karosserie für ein Straßen- oder Schienenfahrzeug bekannt, die ein inneres Rohr aufweist aus mehreren Lagen eines Materials, das mit synthetischem Harz imprägniert ist, mit thermischem Isoliermaterial und Verstärkungen, sowie mit einem äußeren Rohr aus mehreren Lagen eines Materials, das mit synthetischem Harz imprägniert ist, welches um das thermische Isoliermaterial gewickelt ist. Die Druckschrift GB 1 490 575 offenbart eine Fahrgastzelle, umfassend eine Positivform der Fahrgastzelle und eine diese Positivform einhüllende Außenhülle aus faserverstärktem Kunststoff, wobei die Positivform hohl ist, wobei die Positivform eine im Wesentlichen geschlossene äußere Oberfläche aufweist und in der fertigen Fahrgastzelle verbleibt, wobei die Positivform auf der Innenseite Funktionsbauteile umfasst, und wobei die Funktionsbauteile in der Positivform integriert sind, nämlich eine Innenverkleidung, ein Armaturenbrett und/oder eine Halterung für einen Sitz.

Zwar sind Verfahren zur Herstellung faserverstärkter Kunststoffbauteile im Kraftfahrzeugbau also prinzipiell bekannt, dennoch fehlt es an einem Verfahren zur rationellen Herstellung einer Fahrgastzelle.

### OFFENBARUNG DER ERFINDUNG

Aufgabe der Erfindung ist es daher, eine verbesserte Fahrgastzelle beziehungsweise ein verbessertes Verfahren zu deren Herstellung anzugeben. Insbesondere soll eine Möglichkeit für die rationelle Herstellung einer Fahrgastzelle mit gleicher oder sogar verbesserter Qualität im Vergleich zu nach bekannten Verfahren hergestellten Fahrgastzellen geschaffen werden.

Die Aufgabe der Erfindung wird mit einer Fahrgastzelle der eingangs genannten Art gelöst, bei der die Positivform hohl ist, wobei die Positivform eine im Wesentlichen geschlossene äußere Oberflache aufweist und in der fertigen Fahrgastzelle verbleibt, und wobei die Positivform auf der Innenseite Funktionsbauteile umfasst, wobei die Funktionsbauteile in der Positivform integriert sind, nämlich eine Innenverkleidung, ein Armaturenbrett und/oder eine Halterung für einen Sitz.

Weiterhin wird die Aufgabe der Erfindung mit einem Verfahren der eingangs genannten Art gelöst, bei dem die Positivform hohl ist und in der fertigen Fahrgastzelle verbleibt, wobei die Positivform eine im Wesentlichen geschlossene äußere Oberflache aufweist und in der fertigen Fahrgastzelle verbleibt, und wobei die Positivform auf der Innenseite Funktionsbauteile umfasst, wobei die Funktionsbauteile in der Positivform integriert sind, nämlich eine Innenverkleidung, ein Armaturenbrett und/oder eine Halterung für einen Sitz.

Die Positivform weist eine im Wesentlichen geschlossene äußere Oberfläche auf. Auf diese Weise kann die Positivform besonders gut in faserverstärkten Kunststoff eingehüllt werden. Kleinere Öffnungen oder Vertiefungen stören dabei nicht und werden von den Fasern in der Regel problemlos überspannt.

Dadurch dass die Positivform auf der Innenseite Funktionsbauteile umfasst, nämlich eine Innenverkleidung, ein Armaturenbrett und/oder eine Halterung für einen Sitz, kann das Interieur eines Fahrzeugs besonders rationell hergestellt werden, da die Positivform eine Doppelfunktion übernimmt.

Auf diese Weise können Kraftfahrzeuge besonders kostengünstig und mit hoher Qualität hergestellt werden, denn durch die in der Fahrgastzelle verbleibende Positivform können weitere Bearbeitungsschritte, wie sie bei einer verlorenen Form nötig sind, entfallen.

Beispielsweise kann die faserverstärkte Außenhülle unter Zuhilfenahme von "Rovings" und/oder "Prepregs" sowie unter Verwendung eines "Autoklaven" hergestellt werden.

"Rovings" sind Bündel von unverdrehten, gestreckten Fasern, die in der Fertigung von Faserverbundwerkstoffen und besonders von Faser-Kunststoff-Verbunden eingesetzt werden. Rovings sind maschinell verarbeitbar und können somit in automatisierten Prozessen eingesetzt werden.

"Prepregs" sind vorimprägnierte Fasern, welche aus Fasern und einer ungehärteten duroplastischen Kunststoffmatrix bestehen. Prepregs sind maschinell verarbeitbar und können somit in automatisierten Prozessen eingesetzt werden.

Ein "Autoklav" ist ein gasdicht verschließbarer Druckbehälter für die Herstellung von Faser-Kunststoff-Verbundwerkstoffen. In diesen Autoklaven werden üblicherweise Drücke von bis zu 10 bar und Temperaturen von bis zu 400 °C erzeugt, um die einzelnen Laminatschichten zu verpressen. Als Faserhalbzeuge werden häufig Prepregs verwendet.

Weitere vorteilhafte Ausgestaltungen und Weiterbildungen der Erfindung ergeben sich nun aus den Unteransprüchen sowie aus der Beschreibung in Zusammenschau mit den Figuren.

Günstig ist es, wenn die Positivform aus mehreren Teilen besteht. Auf diese Weise können beispielsweise Hinterschneidungen im Innenraum hergestellt werden. Trotz der Trennstellen in der Positivform bleibt die Fahrgastzelle durch die faserverstärkte und insbesondere in sich geschlossene Außenhülle stabil.

In der erfindungsgemäßen Ausgestaltung besteht die Positivform aus thermoplastischem Kunststoff. Bei dieser Variante kann der Positivkern besonders kostengünstig hergestellt werden. Insbesondere kann die Positivform auch faserverstärkt sein.

Günstig ist es, wenn der faserverstärkte Kunststoff Fasergewebe, Fasergeflechte, Fasergestricke oder Faservliese enthält. Auf diese Weise können die Eigenschaften der Fahrgastzelle gut an die Anforderungen an denselben angepasst werden.

Günstig ist es, wenn der faserverstärkte Kunststoff Glasfasern, Kevlarfasern, Aramidfasern, Carbonfasern, Pflanzenfasern, Gesteinsfasern, Fasern aus thermoplastischem Kunststoff oder Gemische derselben enthält. Auf diese Weise können die Eigenschaften der Fahrgastzelle ebenfalls gut an die Anforderungen an denselben angepasst werden.

Besonders vorteilhaft ist es, wenn die Fahrgastzelle Ei-förmig ist. Dadurch ist die Fahrgastzelle entlang ihrer Längsachse besonders stabil ist, wodurch die bei Auffahrunfällen auftretenden Kräfte gut abgeführt werden können.

Besonders vorteilhaft ist es, wenn die Fahrgastzelle fensterlos ist und außenseitige Kameras umfasst, welche zu Übertragung eines Bildes der Umgebung der Fahrgastzelle auf Bildschirme, welche im Inneren der Fahrgastzelle angeordnet sind, vorgesehen ist. Die Fahrgastzelle ist in diesem Fall besonders stabil, da schwächende Öffnungen weitgehend oder zur Gänze fehlen.

Besonders vorteilhaft erfolgt das Umwickeln der Positivform mit Fasern in einer Wickelmaschine. Auf diese Weise kann die Herstellung der Fahrgastzelle automatisiert und Günstig ist es, wenn der faserverstärkte Kunststoff Fasergewebe, Fasergeflechte, Fasergestricke oder Faservliese enthält. Auf diese Weise können die Eigenschaften der Fahrgastzelle gut an die Anforderungen an denselben angepasst werden.

Günstig ist es, wenn der faserverstärkte Kunststoff Glasfasern, Kevlarfasern, Aramidfasern, Carbonfasern, Pflanzenfasern, Gesteinsfasern, Fasern aus thermoplastischem Kunststoff oder Gemische derselben enthält. Auf diese Weise können die Eigenschaften der Fahrgastzelle ebenfalls gut an die Anforderungen an denselben angepasst werden.

Besonders vorteilhaft ist es, wenn die Fahrgastzelle Ei-förmig ist. Dadurch ist die Fahrgastzelle entlang ihrer Längsachse besonders stabil ist, wodurch die bei Auffahrunfällen auftretenden Kräfte gut abgeführt werden können.

Besonders vorteilhaft ist es, wenn die Fahrgastzelle fensterlos ist und außenseitige Kameras umfasst, welche zu Übertragung eines Bildes der Umgebung der Fahrgastzelle auf Bildschirme, welche im Inneren der Fahrgastzelle angeordnet sind, vorgesehen ist. Die Fahrgastzelle ist in diesem Fall besonders stabil, da schwächende Öffnungen weitgehend oder zur Gänze fehlen.

Besonders vorteilhaft erfolgt das Umwickeln der Positivform mit Fasern in einer Wickelmaschine. Auf diese Weise kann die Herstellung der Fahrgastzelle automatisiert und damit noch rationeller und nach noch engeren Qualitätskriterien hergestellt werden. Die Verwendung einer Wickelmaschine zur Herstellung einer Fahrgastzelle wird erst dadurch ermöglicht, dass diese über den Umweg einer Positivform hergestellt wird. Der Vorteil der Erfindung tritt daher an dieser Stelle besonders hervor, beziehungsweise kann die Erfindung in diesem Zusammenhang auch darin gesehen werden, zu erkennen, dass die Herstellung einer Fahrgastzelle über den Umweg einer hohlen Positivform die Anwendung einer Wickelmaschine ermöglicht.

Besonders vorteilhaft ist es, wenn der die Positivform einhüllende faserverstärkte Kunststoff eine in sich geschlossenen Außenhülle bildet, aus dem Türen und/oder Deckel heraus getrennt und danach beweglich mit der Fahrgastzelle verbunden werden. Der Vorteil an dieser Vorgangsweise ist, dass die Außenhülle vorerst in sich geschlossenen hergestellt wird, wodurch die Fahrgastzelle problemlos in einer Wickelmaschine erzeugt werden kann. Zudem ist die Orientierung der Fasern in der Fahrgastzelle sehr homogen, da diese bei der Herstellung der Außenhülle über die spätere Trennfläche zu Türen und/oder Deckel hinweg verlegt werden.

An dieser Stelle wird angemerkt, dass sich die zur Fahrgastzelle genannten Varianten und die sich daraus ergebenden Vorteile analog auf das Herstellungsverfahren angewandt werden können und umgekehrt.

Die obigen Ausgestaltungen und Weiterbildungen der Erfindung lassen sich auf beliebige Art und Weise kombinieren.

### KURZE BESCHREIBUNG DER FIGUREN

Die vorliegende Erfindung wird nachfolgend anhand der in den schematischen Figuren der Zeichnung angegebenen Ausführungsbeispiele näher erläutert. Es zeigen dabei:
- Figur 1: einen Schnitt durch eine erste Variante eines erfindungsgemäßen Fahrzeugs;
- Figur 2: eine Seitenansicht einer zweiten Variante eines erfindungsgemäßen Fahrzeugs;
- Figur 3: eine Schrägansicht einer beispielhaften mehrteiligen Positivform und
- Figur 4: die Schritte zur Herstellung eines schalenförmigen Hohlkörpers nach einer Verfahrensvariante.

### DETAILIERTE BESCHREIBUNG DER ERFINDUNG

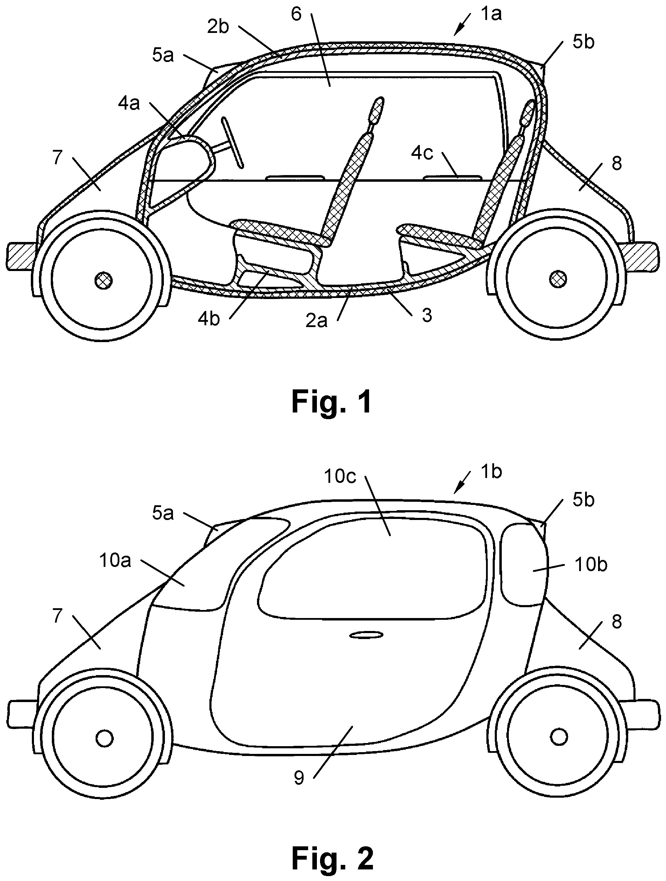

Fig. 1 zeigt einen Schnitt durch ein erstes Fahrzeug welches eine Fahrgastzelle 1a umfasst, die eine mehrteilige Positivform 2a, 2b umfasst, welche von einer Außenhülle 3 aus faserverstärktem Kunststoff eingehüllt ist. Die Positivform 2a, 2b ist hohl und bildet somit den Innenraum der Fahrgastzelle 1a. Auf der Innenseite umfasst die Positivform 2a, 2b in diesem Beispiel Funktionsbauteile, konkret ein Armaturenbrett 4a, eine Halterung 4b für einen Sitz, sowie Armauflagen 4c. Vorteilhaft kann eine Fahrgastzelle 1a auf diese Weise besonders rationell hergestellt werden. Selbstverständlich ist es aber auch möglich, Funktionsbauteile nachträglich in die Fahrgastzelle 1a einzubauen. Insbesondere sind auch Mischformen von in der Positivform 2a, 2b integrierten Funktionsbauteilen 4a..4c und nachträglich eingebauten Funktionsbauteilen möglich.

Die Positivform 2a, 2b weist eine im Wesentlichen geschlossene äußere Oberflache auf, sodass diese leicht in einen faserverstärkten Kunststoff eingehüllt werden kann. Kleinere Öffnungen können aber problemlos überbrückt werden. Die Positivform 2a, 2b besteht
aus thermoplastischem Kunststoff und kann so leicht hergestellt werden. Denkbar ist dabei auch, dass die Positivform ebenfalls faserverstärkt ist.

Die Außenhülle 3 aus faserverstärktem Kunststoff kann Fasergewebe, Fasergeflechte, Fasergestricke und/oder Faservliese enthalten. Weiterhin kann der faserverstärkte Kunststoff Glasfasern, Kevlarfasern, Aramidfasern, Carbonfasern, Pflanzenfasern, Gesteinsfasern, Fasern aus thermoplastischem Kunststoff oder Gemische derselben enthalten.

Im vorliegenden Beispiel ist die Fahrgastzelle 1a fensterlos ausgeführt und umfasst außenseitige Kameras 5a, 5b, welche zu Übertragung eines Bild der Umgebung der Fahrgastzelle 1a auf einen oder mehrere Bildschirme 6, welche im Inneren der Fahrgastzelle 1a angeordnet sind, vorgesehen ist. Die Fahrgastzelle 1a ist somit besonders stabil, was insbesondere auch durch deren Ei-Form begünstigt ist, die entlang ihrer Längsachse besonders stabil ist, wodurch die bei Auffahrunfällen auftretenden Kräfte gut abgeführt werden können.

An die Fahrgastzelle 1a sind schließlich Anbauteile 7 und 8 montiert, welche Teile des Fahrwerks und auch des Antriebs enthalten. Vorteilhaft wird die Fahrgastzelle 1a durch diese Anbauteile 7 und 8 nicht unterbrochen, wodurch die Schutzfunktion der Fahrgastzelle 1a erhalten bleibt.

Fig. 2 zeigt nun ein Fahrzeug in Seitenansicht, welches dem Fahrzeug aus der Fig. 1 sehr ähnlich ist. Im Unterschied dazu umfasst die Fahrgastzelle 1b jedoch Fenster 10a..10c. Die Kameras 5a und 5b und Bildschirme können daher entfallen, sind aber in diesem Ausführungsbeispiel weiterhin enthalten um zusätzliche Sicherheit zu bieten. Beispielsweise könnten die Kameras 5a, 5b die Umgebung im Infrarotbereich erfassen oder besonders lichtempfindlich sein, um die Sicht in der Nacht zu verbessern. Des Weiteren ist in der Fig. 2 auch eine Einstiegstür 9 dargestellt.

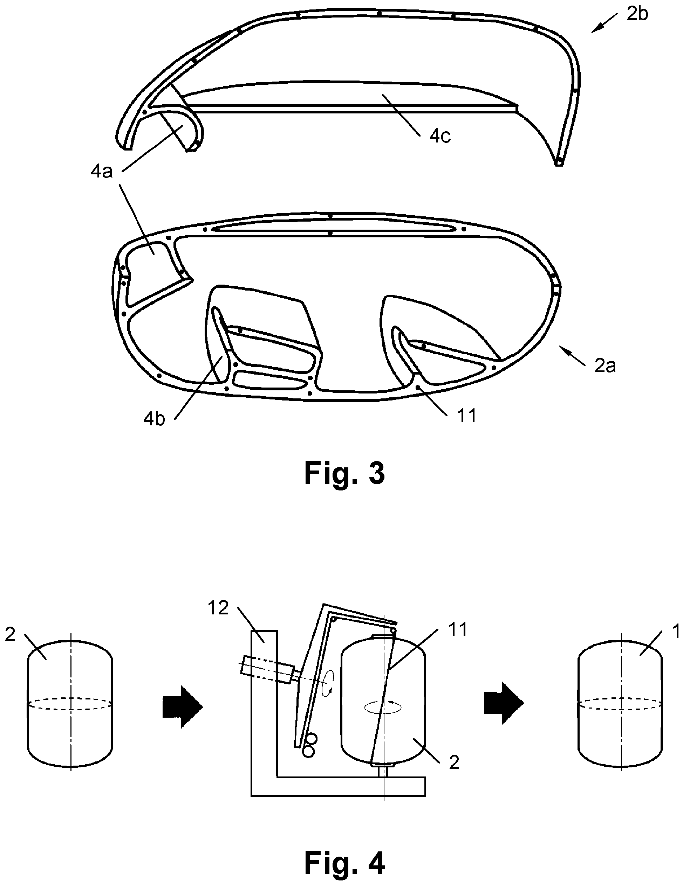

Fig. 3 zeigt die Positivformen 2a und 2b nun in Schrägansicht. Konkret wird rund ein Viertel der Positivform durch den Unterteil 2a und ein weiteres Viertel durch den Oberteil 2b gebildet Gut zu sehen sind in dieser Darstellung auch die Funktionsbauteile, nämlich das Armaturenbrett 4a, die Halterung 4b für einen Sitz, sowie die Armauflage 4c. Letztere bildet gleichzeitig einen Deckel für eine im Unterteil 2a angeordnete Verbreiterung, welche beispielsweise mit Dämmmaterial aufgefüllt sein oder auch eine Audioanlage aufnehmen kann. Um den Zusammenbau der Positivformen 2a, 2b zu erleichtern, weisen diese Passstifte/Passbohrungen 11 auf. Gleichwertig können natürlich auch andere Mittel eingesetzt werden, welche die genaue Ausrichtung der Positivformen 2a, 2b gewährleisten. Um eine stabile Positivform 2a, 2b zu erhalten, können die Teile 2a, 2b natürlich auch verklebt, verschweißt oder auf andere Weise dauerhaft verbunden werden.

Fig. 4 zeigt nun die Schritte eines beispielhaften Herstellungsverfahrens zur Herstellung einer Fahrgastzelle 1. Dabei wird in einem ersten Schritt eine Positivform 2 hergestellt beziehungsweise bereitgestellt (linkes Bild). Diese kann beispielsweise wie in Fig. 3 ausgeführt sein.

In einem weiteren Schritt wird die Positivform 2 in eine Wickelmaschine 12 eingespannt und mit einem Faserstrang 11 umwickelt (mittleres Bild). Der Faserstrang 11 kann unimprägniert sein (Roving) oder mit einer Kunststoffmatrix imprägniert sein (Prepreg). Zudem kann der Faserstrang 11 auch Fasern aus thermoplastischem Kunststoff enthalten. Alternativ oder zusätzlich kann die Positivform 2 auch mit Fasergeflechten, Fasergeweben, Fasergestricken oder Faservliesen belegt werden. Die Fasern können wie erwähnt beispielsweise Glasfasern, Kevlarfasern, Aramidfasern, Carbonfasern, Pflanzenfasern, Gesteinsfasern, Fasern aus thermoplastischem Kunststoff oder Gemische derselben enthalten. Die Positivform selbst besteht
aus thermoplastischem Kunststoff und ist im Spritzgussverfahren hergestellt.

Nach dem Umwickeln wird die Fahrgastzelle 1 fertiggestellt, in dem die Außenhülle 3 mit Harz imprägniert wird (wenn Rovings verwendet werden), oder direkt im Autoklaven ausgehärtet wird (wenn Prepregs oder thermoplastische Fasern verwendet werden). Der so entstandene Hohlkörper ist im rechten Bild dargestellt. Selbstverständlich kann dieser Schritt auch in einer Negativform erfolgen, sodass die Fahrgastzelle 1 nach dem Aushärten praktisch fertig ist.

Vorteilhaft kann die Herstellung einer Fahrgastzelle 1 in der dargestellten Weise sehr rationell erfolgen, da das Umwickeln der Positivform 2 in einer Wickelmaschine 12 und somit automatisiert geschehen kann. Zudem ist die Orientierung der Fasern in der Außenhülle 3 sehr homogen. Schließlich wird der Fertigungsprozess auch dadurch begünstigt, dass die Positivform 2 in der fertigen Fahrgastzelle 1 verbleiben kann.

In einem weiteren Verfahrens schritt werden aus der Fahrgastzelle 1 Türen 9 und/oder Deckel heraus getrennt und danach beweglich mit der Fahrgastzelle 1 verbunden. Zudem werden auch die Fenster 10a..10c herausgetrennt. Das Trennen kann dabei beispielsweise mit Hilfe eines Fräsers, eines Laserschneidverfahrens oder eines Wasserstrahlschneidverfahrens erfolgen.

Der Vorteil an dieser Vorgangsweise ist, dass die Außenhülle 3 vorerst in sich geschlossen hergestellt wird, wodurch die Fahrgastzelle 1 problemlos in einer Wickelmaschine 12 erzeugt werden kann. Zudem ist die Orientierung der Fasern in der Fahrgastzelle 1 sehr homogen, da diese bei der Herstellung der Außenhülle 3 über die spätere Trennfläche zur Tür 9 hinweg verlegt werden.

Selbstverständlich ist es aber auch möglich, die Türen 9 gesondert herzustellen und die entsprechenden Ausschnitte schon bei der Herstellung der Außenhülle 3 oder sogar schon bei der Herstellung der Positivform 2 zu berücksichtigen.

Die gezeigten Beispiele sollen die Erfindung lediglich illustrieren und stellen nur einen Auszug aus den vielen Möglichkeiten dar. Selbstverständlich kann die äußere Form eines Kraftfahrzeugs anders sein als dargestellt. Beispielsweise können die Anbauteile 7 und 8 auch in die Fahrgastzelle integriert sein und der Motorraum beispielsweise mit einer gesonderten Platte verschlossen werden.

Abschließend wird festgehalten, dass die Bestandteile der Figuren ggf. nicht maßstabsgetreu dargestellt sind und dass die einzelnen in den Figuren dargestellten Varianten auch den Gegenstand einer unabhängigen Erfindung bilden können. Lageangaben wie "rechts", "links", "oben", "unten" und dergleichen beziehen sich auf die dargestellte Lage des jeweiligen Bauteils und sind bei Änderung der genannten Lage gedanklich entsprechend anzupassen.

## Patentansprüche

1. Fahrgastzelle (1, 1a, 1b), umfassend eine Positivform (2, 2a, 2b) der Fahrgastzelle (1, 1a, 1b) und eine diese Positivform (2, 2a, 2b) einhüllende Außenhülle (3) aus faserverstärktem Kunststoff, wobei die Positivform (2, 2a, 2b) hohl ist, wobei die Positivform (2, 2a, 2b) eine im Wesentlichen geschlossene äußere Oberflache aufweist und in der fertigen Fahrgastzelle (1, 1a, 1b) verbleibt, wobei die Positivform (2, 2a, 2b) auf der Innenseite Funktionsbauteile (4a, 4b, 4c) umfasst, wobei die Funktionsbauteile (4a, 4b, 4c) in der Positivform (2a, 2b) integriert sind, nämlich eine Innenverkleidung, ein Armaturenbrett und/oder eine Halterung für einen Sitz, wobei die Fahrgastzelle **dadurch gekennzeichnet ist, dass** die Positivform aus thermoplastischem Kunststoff besteht und im Spritzgussverfahren hergestellt ist.

2. Fahrgastzelle (1, 1a, 1b) nach Anspruch 1 **dadurch gekennzeichnet, dass** die Positivform aus mehreren Teilen (2a, 2b) besteht.

3. Fahrgastzelle (1, 1a, 1b) nach einem der Ansprüche 1 bis 2, **dadurch gekennzeichnet, dass** die Positivform (2, 2a, 2b) aus dünnwandigem thermoplastischem Kunststoff besteht.

4. Fahrgastzelle (1, 1a, 1b) nach einem der Ansprüche 1 bis 3, **dadurch gekennzeichnet, dass** der faserverstärkte Kunststoff Fasergewebe, Fasergeflechte, Fasergestricke und/oder Faservliese enthält.

5. Fahrgastzelle (1, 1a, 1b) nach einem der Ansprüche 1 bis 4, **dadurch gekennzeichnet, dass** der faserverstärkte Kunststoff Glasfasern, Kevlarfasern, Aramidfasern, Carbonfasern, Pflanzenfasern, Gesteinsfasern, Fasern aus thermoplastischem Kunststoff oder Gemische derselben enthält.

6. Fahrgastzelle (1, 1a, 1b) nach einem der Ansprüche 1 bis 5, **dadurch gekennzeichnet, dass** diese Ei-förmig ist.

7. Verfahren zur Herstellung einer Fahrgastzelle (1, 1a, 1b), bei dem eine Positivform (2, 2a, 2b) der Fahrgastzelle (1, 1a, 1b) in faserverstärktem Kunststoff eingehüllt wird, wobei die Positivform (2, 2a, 2b) hohl ist, wobei die Positivform (2, 2a, 2b) eine im Wesentlichen geschlossene äußere Oberflache aufweist und in der fertigen Fahrgastzelle (1, 1a, 1b) verbleibt, wobei
die Positivform (2, 2a, 2b) auf der Innenseite Funktionsbauteile (4a, 4b, 4c) umfasst, wobei die Funktionsbauteile (4a, 4b, 4c) in der Positivform (2a, 2b) integriert sind, nämlich eine Innenverkleidung, ein Armaturenbrett und/oder eine Halterung für einen Sitz, **dadurch gekennzeichnet, dass** die Positivform aus thermoplastischem Kunststoff besteht und im Spritzgussverfahren hergestellt ist.

8. Verfahren zur Herstellung einer Fahrgastzelle (1, 1a, 1b) nach Anspruch 7, **dadurch gekennzeichnet, dass** die Positivform (2, 2a, 2b) mit einem Faserstrang (11) und/oder Fasergeweben, Fasergeflechten, Fasergestricken oder Faservliesen umwickelt wird.

9. Verfahren nach Anspruch 8, **dadurch gekennzeichnet, dass** das Umwickeln in einer Wickelmaschine (12) erfolgt.

10. Verfahren nach einem der Ansprüche 7 bis 9, **dadurch gekennzeichnet, dass** der die Positivform (2, 2a, 2b) einhüllende faserverstärkte Kunststoff eine in sich geschlossene Außenhülle (3) bildet, aus dem Türen (9) und/oder Deckel heraus getrennt werden und danach beweglich mit der Fahrgastzelle (1, 1a, 1b) verbunden werden.

## Claims

1. Passenger cell (1, 1a, 1b) comprising a positive mould (2, 2a, 2b) of the passenger cell (1, 1a, 1b) and an outer covering (3) from fibre-reinforced plastics material that shrouds said positive mould (2, 2a, 2b), wherein the positive mould (2, 2a, 2b) is hollow, wherein the positive mould (2, 2a, 2b) has a substantially closed outer surface and remains in the finished passenger cell (1, 1a, 1b), wherein the positive mould (2, 2a, 2b) on the inner side comprises functional components (4a, 4b, 4c), wherein the functional components (4a, 4b, 4c), specifically an interior trim, a dashboard, and/or a mounting for a seat, are integrated in the positive mould (2a, 2b), wherein the passenger cell is **characterized in that** the positive mould is composed of thermoplastic plastics material and is produced by the injection-moulding method.

2. Passenger cell (1, 1a, 1b) according to Claim 1, **characterized in that** the positive mould is composed of a plurality of parts (2a, 2b).

3. Passenger cell (1, 1a, 1b) according to one of Claims 1 to 2, **characterized in that** the positive mould (2, 2a, 2b) is composed of a thin-walled thermoplastic plastics material.

4. Passenger cell (1, 1a, 1b) according to one of Claims 1 to 3, **characterized in that** the fibre-reinforced plastics material includes fibrous woven fabrics, fibrous braided fabrics, fibrous knitted fabrics, and/or fibrous non-wovens.

5. Passenger cell (1, 1a, 1b) according to one of Claims 1 to 4, **characterized in that** the fibre-reinforced plastics material includes glass fibres, Kevlar fibres, aramid fibres, carbon fibres, vegetable fibres, mineral fibres, fibres from a thermoplastic plastics material, or mixtures thereof.

6. Passenger cell (1, 1a, 1b) according to one of Claims 1 to 5, **characterized in that** said passenger cell (1, 1a, 1b) is ovoid.

7. Method for producing a passenger cell (1, 1a, 1b), in which method a positive mould (2, 2a, 2b) of the passenger cell (1, 1a, 1b) is shrouded in a fibre-reinforced plastics material, wherein the positive mould (2, 2a, 2b) is hollow, wherein the positive mould (2, 2a, 2b) has a substantially closed outer surface and remains in the finished passenger cell (1, 1a, 1b), wherein the positive mould (2, 2a, 2b) on the inner side comprises functional components (4a, 4b, 4c), wherein the functional components (4a, 4b, 4c), specifically an interior trim, a dashboard, and/or a mounting for a seat, are integrated in the positive mould (2a, 2b), **characterized in that** the positive mould is composed of thermoplastic plastics material and is produced by the injection-moulding method.

8. Method for producing a passenger cell (1, 1a, 1b) according to Claim 7, **characterized in that** the positive mould (2, 2a, 2b) is wrapped with a fibre strand (11) and/or fibrous woven fabrics, fibrous braided fabrics, fibrous knitted fabrics, or fibrous non-wovens.

9. Method according to Claim 8, **characterized in that** the wrapping is performed in a wrapping machine (12) .

10. Method according to one of Claims 7 to 9, **characterized in that** the fibre-reinforced plastics material shrouding the positive mould (2, 2a, 2b) forms an inherently closed outer cover (3) from which doors (9) and/or lids are cut out and thereafter are connected in a movable manner to the passenger cell (1, 1a, 1b).

## Revendications

1. Habitacle (1, 1a, 1b), comprenant une forme positive (2, 2a, 2b) de l'habitacle (1, 1a, 1b) et une enveloppe extérieure (3) en matière plastique renforcée par des fibres enveloppant cette forme positive (2, 2a, 2b), dans lequel la forme positive (2, 2a, 2b) est creuse, dans lequel la forme positive (2, 2a, 2b) présente une surface extérieure essentiellement fermée et reste dans l'habitacle terminé (1, 1a, 1b), dans lequel la forme positive (2, 2a, 2b) comprend des composants fonctionnels (4a, 4b, 4c) sur le côté intérieur, dans lequel les composants fonctionnels (4a, 4b, 4c) sont intégrés dans la forme positive (2a, 2b), à savoir un habillage intérieur, un tableau de bord et/ou un support pour un siège, dans lequel l'habitacle est **caractérisé en ce que** la forme positive se compose de matière plastique thermoplastique et est fabriquée par un procédé de moulage par injection.

2. Habitacle (1, 1a, 1b) selon la revendication 1, **caractérisé en ce que** la forme positive se compose de plusieurs parties (2a, 2b).

3. Habitacle (1, 1a, 1b) selon une des revendications 1 à 2, **caractérisé en ce que** la forme positive (2, 2a, 2b) se compose de matière plastique thermoplastique en paroi mince.

4. Habitacle (1, 1a, 1b) selon l'une quelconque des revendications 1 à 3, **caractérisé en ce que** la matière plastique renforcée par des fibres contient des tissus de fibres, des treillis de fibres, des tricots de fibres et/ou des non tissés de fibres.

5. Habitacle (1, 1a, 1b) selon l'une quelconque des revendications 1 à 4, **caractérisé en ce que** la matière plastique renforcée par des fibres contient des fibres de verre, des fibres de kevlar, des fibres d'aramide, des fibres de carbone, des fibres végétales, des fibres de roches, des fibres de matière plastique thermoplastique, ou des mélanges de celles-ci.

6. Habitacle (1, 1a, 1b) selon l'une quelconque des revendications 1 à 5, **caractérisé en ce qu'**il est en forme d'oeuf.

7. Procédé de fabrication d'un habitacle (1, 1a, 1b), dans lequel on enveloppe une forme positive (2, 2a, 2b) de l'habitacle (1, 1a, 1b) dans une matière plastique renforcée par des fibres, dans lequel la forme positive (2, 2a, 2b) est creuse, dans lequel la forme positive (2, 2a, 2b) présente une surface extérieure essentiellement fermée et reste dans l'habitacle terminé (1, 1a, 1b), dans lequel la forme positive (2, 2a, 2b) comprend des composants fonctionnels (4a, 4b, 4c) sur le côté intérieur, dans lequel les composants fonctionnels (4a, 4b, 4c) sont intégrés dans la forme positive (2a, 2b), à savoir un habillage intérieur, un tableau de bord et/ou un support pour un siège, **caractérisé en ce que** la forme positive se compose d'une matière plastique thermoplastique et est fabriquée par un procédé de moulage par injection.

8. Procédé de fabrication d'un habitacle (1, 1a, 1b) selon la revendication 7, **caractérisé en ce que** l'on enrobe la forme positive (2, 2a, 2b) avec un cordon de fibres (11) et/ou des tissus de fibres, des treillis de fibres, des tricots de fibres ou des non tissés de fibres.

9. Procédé selon la revendication 8, **caractérisé en ce que** l'on effectue l'enrobage dans une machine d'enroulement (12).

10. Procédé selon l'une quelconque des revendications 7 à 9, **caractérisé en ce que** la matière plastique renforcée par des fibres enveloppant la forme positive (2, 2a, 2b) forme une enveloppe extérieure par nature fermée (3), de laquelle des portes (9) et/ou un couvercle ont été séparés et ensuite assemblés de façon mobile à l'habitacle (1, 1a, 1b).
